# EUROPEAN PATENT SPECIFICATION

(11) **EP 1 820 113 B1**
(45) Date of publication and mention of the grant of the patent: **17.09.2014**
(21) Application number: 05815156.4
(22) Date of filing: 13.10.2005
(51) Int. Cl.: H04B 1/38, H04L 29/08

(54) **Method and system for wireless transmission**
Verfahren und System zur drahtlosen Übertragung
Procédé et système pour transmission sans fil

(30) Priority: 03.11.2004 US 624940 P; 13.12.2004 US 11865; 13.01.2005 US 36479
(43) Date of publication of application: 22.08.2007
(73) Proprietor: Sony Electronics, Inc., Park Ridge, NJ 07656 (US)
(72) Inventor: UNGER, Robert, Allan, El Cajon, CA 92019 (US)
(74) Representative: DeVile, Jonathan Mark
(86) International application number: PCT/US2005/036730
(87) International publication number: WO 2006/052376

(56) References cited:
- WO-A2-01/59622
- US-A1- 2003 025 648
- US-B1- 6 195 687
- US-B1- 6 405 294
- US-B2- 7 009 616

## Description

### I. Field of the invention

The present invention relates generally to wireless multimedia transmission systems.

### II. Background of the invention

Digital video can be transmitted from a source, such as a DVD player, video receiver, ATSC tuner, or other computer, to a display, such as a flat panel video monitor, using a protocol known as Digital Visual Interface (DVI). Having been developed primarily for computers, DVI does not envision processing audio data.

Accordingly, to extend communication protocols to digital multimedia that includes audio for the purpose of, e.g., playing digital movies and the like, a protocol referred to as High Definition Multimedia Interface (HDMI) has been developed. HDMI is similar to DVI except it envisions the use of audio as well as video data and it adds television-related resolutions. Broth DVI and HDMI are intended for wired transmission, and HDMI further permits the encryption of digital multimedia using an encryption method known as High-Bandwidth Digital Content Protection (HDCP). DVI also supports HDCP as an optional characteristic.

US 2003/025648 describes a wireless drawing command transmitting unit including a wireless transmitter operative to transmit drawing commands associated with a master image renderer. A wireless drawing command receiving unit includes a wireless receiver operative to receive the transmitted drawing commands and generates an image for a display device using the drawing commands transmitted wirelessly. In addition, the wireless drawing command receiving unit transmits drawing command throttle data back to the wireless drawing command transmitting unit to throttle transmission of drawing commands that are sent by the drawing command transmitting unit.

WO 01/59622 describes a system for remotely storing data on a server through a wireless connection instead of storing data locally in a consumer device.

US 6,405,294 describes a system for migrating computer applications and volumes of data from a source connected to a source computer system to a target connected to a target computer system that uses one or more processes to mirror all data and all data updates from the source to the target.

As recognized herein, to save table space and to increase people's mobility and viewing lines in the room, it may be desirable to view the multimedia on a display using a minimum of wiring. For instance, it may be desirable to mount a projector on the ceiling or to mount a plasma display or liquid crystal high definition (HD) television display on a wall, out of the way and capable of receiving multimedia data for display without the need for wires, since as understood herein among other things data transmission lines often do not exist in ceilings or walls.

The present invention further understands, however, that not just any wireless transmission system will do. Specifically, if a wireless link such as IEEE 802.11 (b) is used that has a bandwidth which is insufficient to carry either compressed or uncompressed multimedia such as uncompressed high definition (HD) video, compressed multimedia standard definition (SD) video would have to be transmitted, requiring a relatively expensive decompression module at the projector. Some links such as IEEE 802.11 (a) do have a bandwidth high enough to carry compressed HD video but not uncompressed SD or HD video. Also, in the case of 802.11 (a) copyright protection may be implicated because the link is sufficiently long range (extending beyond the room in which it originates) that it can be detected beyond the immediate location of the transmitting laptop. With this in mind, the present invention recognizes the need for a very short range, preferably directional, high bandwidth wireless link that is particularly suited for the short range wireless communication of uncompressed multimedia, particularly the rather voluminous genre of multimedia known as HD video.

The present assignee has provided a wireless system that functions in the spectrum between 57GHz and 64GHz (hereinafter "60GHz band"). Characteristics of the 60GHz spectrum include short range, high directivity (and, hence, inherent security), and large data bandwidth. The present assignee's co-pending U.S. patent applications serial nos. 10/666,724, 10/744,903 (systems), 10/893,819, 11/136,199 (PLL-related inventions), and 11/035,845 (multiple antennae), disclose various systems and methods for sending high definition (HD) video in High Definition Multimedia Interface (HDMI) format from a source in a room to a receiver in the room, using a high bandwidth 60GHz link. At this frequency the signal has very short range and can be directional such that the video may be transmitted in an uncompressed form such that so much data is transmitted each second that bootlegging the content is essentially untenable.

Regardless of the particular application, the present invention makes the following critical observation. As understood herein, it is sometimes necessary for a master component (such as a microcontroller) in the source of data to read and write information to a slave component (such as a register) in the display for control purposes using an appropriate protocol such as the so-called "I²C" protocol. Topically, the master writes data to and reads data from register locations in the slave, and several slaves can be used, each with its own address. As an example, it might be necessary for a master in the source to write security information as might be related to the above-mentioned HDCP to one or more slaves in the display.

As further understood herein, it is desirable that reads and writes between master and slave occur in near real time, particularly in the case of encryption key exchange that is necessary to support decryption of video being played. The present invention critically recognizes that this is a challenge in wireless applications and in particular in effecting reads in wireless applications, because the read request must be transmitted across the wireless link from master to slave, acted on, and then requested data returned from slave to master over the link, potentially introducing unwanted latency.

### SUMMARY OF THE INVENTION

Aspects of the invention are defined in the appended claims.

A multimedia display system includes a source system of multimedia data and a display system of multimedia data. The display system includes a display, and the source system and display system communicate wirelessly with each other using an optical communication system. The source system has a master writing data to a slave in the display system. A slave simulator is in the source system and mirrors the slave written to by the master, so that read commands from the master may be satisfied from the slave simulator.

A master simulator is provided in the display system in communication with the slave to update the slave simulator with changes in the slave. To this end, a first shadow memory is provided in the slave simulator and a second shadow memory is provided in the master simulator, with the master simulator operating in an automatic loop to compare data in the slave to data in the second shadow memory and based thereon updating the first shadow memory.

The multimedia may be, in non-limiting implementations, Digital Visual Interface (DVI) multimedia and/or High Definition Multimedia Interface (HDMI) multimedia. The wireless link may be in the infrared band. Data can be transmitted between the master and the slave using I²C protocol.

In another aspect, a system for displaying multimedia from a source system on a display system in infrared wireless communication with the source system using a wireless link includes means for writing information useful in displaying the multimedia from a master at the source system to a slave at the display system. The system also includes means for satisfying subsequent read commands from the master for the data from a slave simulator at the source system without sending the read command over the wireless link.

In yet another aspect, a method for displaying multimedia from a source on a display includes wirelessly transmitting the multimedia from the source to the display using an infrared wireless link, and writing data to a slave at the display from a master at the source using a wireless link. The method also includes periodically polling the slave for changes. Any changes are sent, over the wireless link, to at least one shadow memory at the source, so that the shadow memory mirrors contents of the slave. Read commands from the master addressed to the slave are immediately executed from the shadow memory.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 is a block diagram showing a non-limiting exemplary implementation of the present system;
Figure 2 is a block diagram of the master and slave components;
Figure 3 is a flow chart of the write logic;
Figure 4 is a flow chart of the read preparation logic; and
Figures 5-7 are block diagrams of the transmitter and receiver of an alternate transmitter that uses optical transmission.

### DETAILED DESCRIPTION OF THE PREFERRED EMBODIMENT

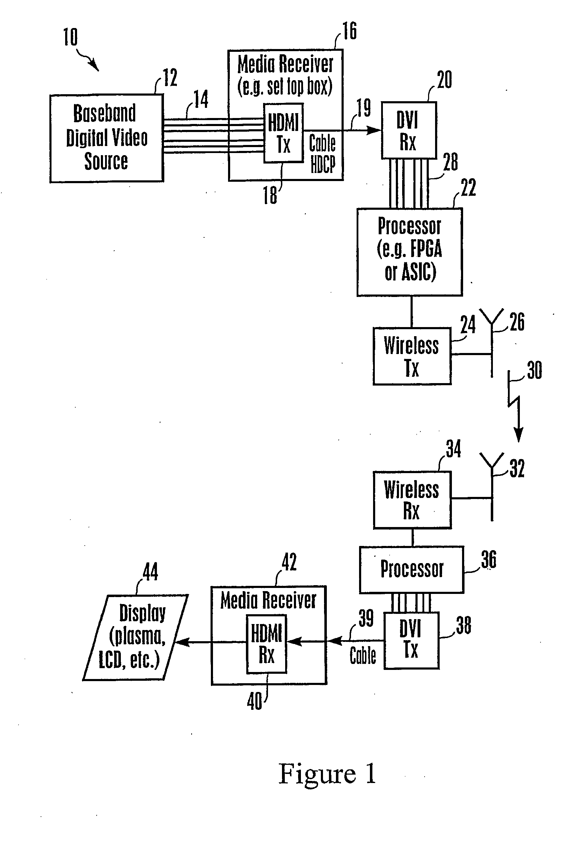

Referring initially to Figure 1, a system is shown, generally designated 10, which includes a source 12 of baseband multimedia data, and in particular high definition (HD) digital video with audio. The source 12 may be a laptop computer or other multimedia computer or server. Or, it can be a satellite, broadcast, or cable receiver, or it can be a DVD player or other multimedia source, such as a video receiver, ATSC tuner, or other computer.

The source 12 sends multiplexed multimedia data over lines 14 to a media receiver 16. The media receiver 16 may be a set-top box that can include a High Definition Multimedia Interface (HDMI) transmitter 18. The HDMI transmitter 18 employs HDMI protocols to process the multimedia data by, among other things, encrypting the data using High-Bandwidth Digital Content Protection (HDCP) and supporting TV resolutions such as 16 x 9 display ratios to the multimedia data.

The HDMI transmitter 18 can send HDCP-encrypted multimedia data over a cable or other wire 19 to a Digital Visual Interface (DVI) receiver 20. According to the present invention, the DVI receiver 20 uses DVI protocols to process the received data. As part of the processing the HDMI transmitter 18 multiplexes the video and multiplexes the audio within the video data stream. This can be done by multiplexing the audio into the vertical blanking interval (VBI) of the video or it can be done using the trailing edge of a clock signal, or by other means. The DVI receiver 20 demultiplexes the video while passing through the audio multiplexed within the data stream. in any case, at no time need the DVI receiver 20 decrypt or re-encrypt the stream.

The encrypted multimedia data from the VBI receiver 20 is sent to a processor 22, such as an application specific integrated circuit (ASIC) or field programmable gate array (FPGA). The processor 22 processes the data for wireless transmission by a wireless transmitter 24 over a transmitting antenna 26. The processor 22 can, among other things, re-multiplex hnrenty four lines of video and control signals as might be present on twenty four multiplex lines 28 into two signals such as might be required to support QPSK modulation. Additional control signals for the display may also be multiplexed within the video data stream. Also, error correction may be implemented that is appropriate for wireless transmission in accordance with wireless transmission principles known in the art. Details of a non-limiting processor can be found in the above-referenced provisional application.

In any case, the encrypted multimedia data is wirelessly transmitted over a wireless link 30 to a receiver antenna 32, which sends the data to a wireless receiver 34. In accordance with present principles, the link 30 carries a frequency which is sufficiently high that the signal on the link substantially cannot be received outside the room. Also, multimedia may be transmitted in an uncompressed form on the link 30 such that so much data is transmitted each second that bootlegging the content is essentially untenable, although some data compression less preferably may be implemented. The data may also be transmitted in compressed form if desired. The transmitter 24 and receiver 34 (and, hence, link 30) preferably operate at a fixed (unvarying, single-only) frequency of approximately sixty GigaHertz (60GHz), and more preferably in the range of 59GHz-64GHz, and the link 30 has a data rate, preferably fixed, of at least two Giga bits per second (2.0 Gbps). When DQPSK is used the data rate may be 2.2 Gbps, and the link may have a data rate of approximately 2.5 Gbps. The link may have a fixed bandwidth of two and half GigaHertz (2.5GHz).

With this in mind, it may now be appreciated that the wireless transmitter 24 preferably includes an encoder for encoding in accordance with principles known in the art. The encoded data is modulated and upconverted by an upconverter for transmission over the link 30 at about 60GHz. Using the above-described wide channel and a simpler modulation scheme such as but not limited to DQPSK, QPSK, BPSK or 8-PSK, a high data rate yet simple system can be achieved. For example, when DQPSK is used, a data rate of twice the symbol rate can be achieved. For 8-PSK a data rate of 3.3 Gbps may be achieved.

It may further be appreciated that the wireless receiver 34 includes circuitry that is complementary to the wireless transmitter 24, namely, a downconverter, a demodulator, and a decoder. In any case, the data from the wireless receiver 34 is sent to a processor 36 for error correction and re-multiplexing as appropriate for use by a DVI transmitter 38. The processor 36 can also demultiplex any control signals for the display from within the video data as might be necessary. Details of a non-limiting processor are set forth in the above-referenced provisional application.

The DVI transmitter 38 operates in accordance with DVI principles known in the art to process the encrypted multimedia without ever decrypting it, and to send the multimedia data over a cable or other wire 39 to a HDMI receiver 40 that may be part of a media player 42, such as a DVD player or TV or other player. The HDMI receiver 40 decrypts the multimedia data in accordance with HDCP principles and demultiplexes the audio data from the video data. The multimedia content may then be displayed on a display 44, such as a cathode ray tube (CRT), liquid crystal display (LCD), plasma display panel (PDP), or TFT, or projector with screen, etc.

According to the present invention, the DVI receiver 20, processor 22, and wireless transmitter 24 may be contained on a single chip, or on separate substrates. Indeed, the DVI receiver 20, processor 22, and wireless transmitter 24 may be integrated into the media receiver 16. Likewise, the wireless receiver 34, processor 36, and DVI transmitter 38 may be implemented on a single chip and may be integrated into the media player 42 if desired. In any case, the media receiver 16 and media player 42 and respective components preferably are co-located in the same space, owing to the preferred 60GHz wireless transmission frequency, which cannot penetrate walls.

Because DVI components are used in the wireless portion of the communication path between the media receiver 16 (e.g., a set-top box) and the media player 42 (e.g., a TV or DVD player) in the non-limiting embodiment shown, no encryption keys (or concomitant licenses) are required for this portion. Also, because the multimedia is never decrypted in the wireless portion established between the DVI components 20, 38 inclusive, little or no regulatory concerns are implicated.

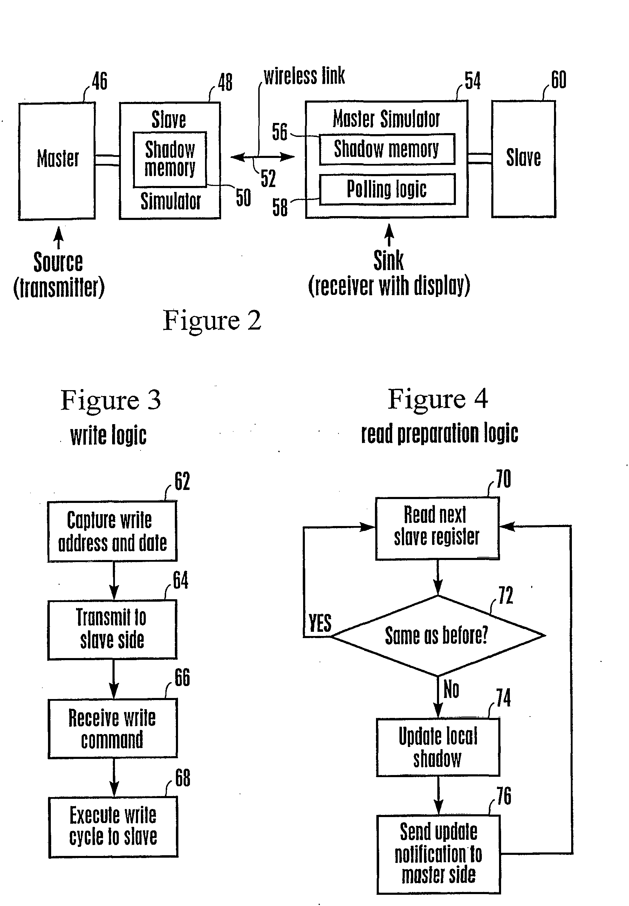

Figure 2 shows the source and slave components of the present invention. It is to be understood that the source components may be implemented by, e.g., the source processor 22 and that the slave components may be implemented by, e.g., the processor 36 of the sink, i.e., of the receiver.

The source components include a master 46 that may be implemented by a suitable microcontroller. The master 48 communicates over wires with a slave simulator 48 that includes a master-side shadow memory 50, which may be implemented by, e.g., a dual port RAM. In turn, the slave simulator 48 communicates over a wireless link 52 (such as the wireless link discussed above) with a master simulator 54, and the master simulator 54 has a slave-side shadow memory 56 and logic 58 for executing the methods below. The master simulator 54 communicates over wires with a slave 60, it being understood that the master simulator 54 is essentially logically identical to the master 46 and that the slave simulator 48 is essentially logically identical to the slave 60. The master simulator 54 may be implemented by a microcontroller, and the slave simulator 48 and slave 60 can accept read and write commands in register locations. For instance, security information such as but not limited to encryption keys can be written, using the logic below, by the master 46 to the slave 60 and can be read by the master 46 from the slave 60, with the information in the slave 60 being useful by the above-described receiver (slave-side) components for presenting multimedia from the source 12. Accordingly, the shadow memories 50, 56 mirror what is in the registers of the slave 60.

Figure 3 shows the write logic of the present invention. At block 62 the master 46 asserts a string of bits that provide the address of the slave 60 desired to be used, subaddress (e.g., of the registers desired to be used in the slave 60), and data bytes. This information is captured with appropriate handshakes, wrapped in wireless protocol, and sent through the slave simulator 48 to the slave side master simulator 54 over the wireless link 52. The write command is received by the master simulator 54 at block 66 and executed by writing the data to the slave 60 at block 68. The initially-written data can be stored in the shadow memories 50, 56 if desired, prior to the master simulator 54 executing the read preparation logic in Figure 4. In any case, after the write has been completed to the slave 60, the receiver side (sink) components acknowledge completion of the write to the source transmitter (source) side in accordance with write principles of, e.g., the above-mentioned I²C protocol.

As recognized herein, the master 46 expects a substantially immediate response to read commands, and insufficient time may be available to send a read request over the wireless link and receive back a reply. This is the problem that the shadow memories and simulators discussed herein resolve. More specifically, referring now to Figure 4, because the information in the slave 60 might change for various reasons, the master simulator 54 maintains the shadow memories 50, 56 current by periodically executing the logic at block 70, wherein a register in the slave 60 is read and compared, at decision diamond 72, to the corresponding data that is mirrored in the shadow memory 56 of the master simulator 54. If the data is the same the logic loops back to block 70 to test the next register of the slave 60.

However, when a change is detected in the slave 60, the logic moves from decision diamond 72 to block 74, wherein the shadow memory 56 of the master simulator 54 is updated. Proceeding to block 76, the master simulator 54 sends the update to the slave simulator 48 so that the shadow memory 50 is updated. It will readily be appreciated that if the master 46 subsequently issues a read command, it is immediately executed from the slave simulator 48, which returns a response to the master 46 without the command and response having to transit the wireless link 52. All protocol timing is maintained between the master 46 and the slave simulator 48, so that it appears to the master 46 that it is accessing the slave 60.

The polling logic of Figure 4 may be implemented by polling through all possible sub-addresses of the slave 60, or polling only the sub-addresses known to be volatile, or some combination thereof. Thus, in some implementations, the locations in the slave 60 that are of interest to the master 46 can be learned by the master simulator 54 by observing which slave 60 addresses are being read by the master 46, and these locations may be polled exclusively or simply more frequently than other locations. Also, the logic above can be extended to more than one data type and/or device, e.g., extended display identification data (EDID) in a DVI display can be written and read using the above logic, as well as HDCP key exchanges and other data, all of which can be supported.

The above logic can be executed by one or more of the processors herein, all of which are non-limiting examples of various means for satisfying writes and read requests from the master to the slave.

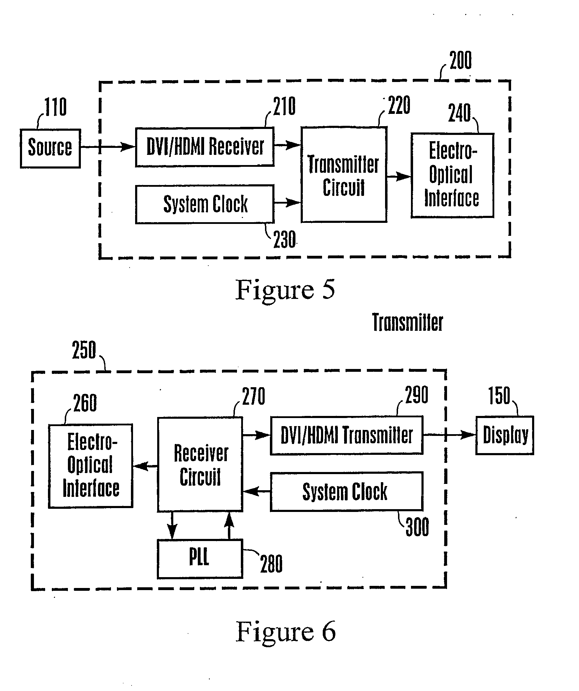

Instead of using 60GHz, optical transmission principles may be used in lieu of the transmitter 24 and receiver 34 shown in Figure 1. Figures 5-7 show such an alternate embodiment in which the wireless transmitter is an optical transmitter, in one implementation transmitting infrared energy that is encoded with the data sought to be transferred.

As shown in Figure 5, a transmitter 200 receives the video signal from a data source 110. The transmitter 200 may includes a DVI/HDMI receiver 210, a transmitter circuit 220, a system clock 230 and a transmitter electro-optical interface 240. While in one embodiment, the data source 110 is an HDMI or DVI video source (e.g., ATSC tuner, DVD player, etc.), it may similarly be another type of data source, such as the source 12 shown in Figure 1.

As depicted in Figure 5, the data source 110 provides a digital signal to the DVI/HDMI receiver 210. The DVI/HDMI receiver 210 may be used to convert the DVI/HDMI digital signal from the data source 110 into a digital video signal, such as 24-bit RGB. In another embodiment, the DVI/HDMI receiver 210 and the transmitter circuit 220 may be combined into a single logical circuit. While in one embodiment, the transmitter circuit 220 may be a Field Programmable Gate Array (FPGA) or an Application-Specific Integrated Circuit (ASIC), it may similarly have other implementations. These elements may be substantially identical to the corresponding elements in Figures 1-4 above, except for the use of optical instead of 60GHz transmission.

The other input for the transmitter circuit 220 comes from the system clock 230, which provides a clock signal. In one embodiment, this clock signal is a 110 MHz signal. The output of the transmitter circuit 220 is to a transmitter electro-optical interface 240.

Figure 6 shows an optical receiver 250 that receives the optical signal from the optical transmitter 200. The receiver 250 may include a receiver electro-optical interface 260, a receiving circuit 270, a phase lock loop (PLL) 280, a DVI/HDMI transmitter 290, and a system clock 300. The optical receiver 250 is further depicted as outputting video data to a display device 150. While in one embodiment, the digital video data output to the display device 150 is one of HDMI and DVI data, it may similarly be another type of data. Except for the use of optical reception, the receiver 250 may be substantially identical to the receiver shown in Figures 1-4.

Accordingly, as shown in Figure 6, the optical receiver 250 can include a DVI/HDMI transmitter 290. In another embodiment, the DVI/HDMI transmitter 290 and the receiver circuit 270 may be combined into a single logical circuit. As mentioned above, another input to the receiver circuit 270 comes from the system clock 300, which provides a clock signal. In one embodiment, this clock signal is a 110 MHz signal. The transmitter circuit 270 is further shown as being in communication with a PLL 280, which may be used to help regenerate the video clock of the DVI/HDMI transmitter 290.

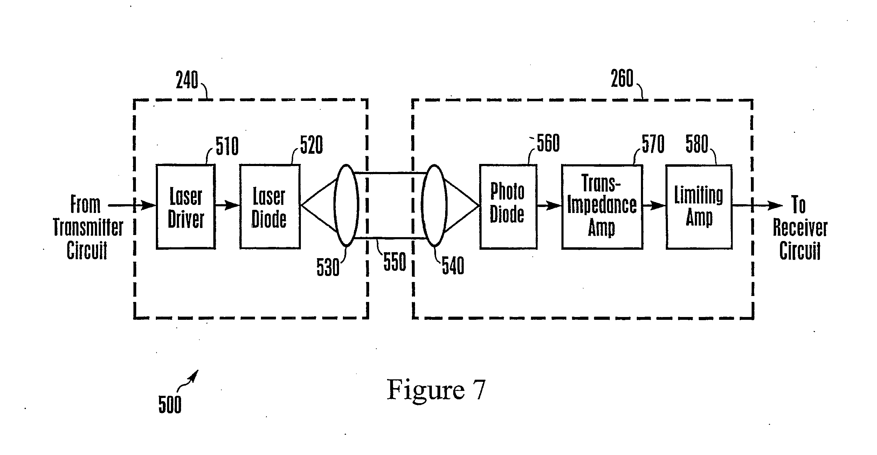

Referring now to Figure 7, a block diagram of one embodiment of an electro-optical system 500 is shown, which includes the transmitting electro-optical interface 240 of Figure 5 communicating with the receiving electro-optical interface 260 of Figure 6. In this embodiment, the transmitting electro-optical interface 240 provides an optical signal 550 which is received by the receiving electro-optical interface 260. In this embodiment, the transmitting circuit 220 provides the video signal in the form of a digital electrical signal to the laser driver 510 which, in turn, generates a series of electrical potentials to the laser diode 520. This sequence of electrical potentials is used by the laser diode 520 to convert the signal into an optical signal 550. Moreover, a collimating lens 530 may be used to focus the optical signal 550 such that it is properly receivable by the receiving electro-optical interface 260.

A focusing lens 540 may be used to capture and focus the optical signal 550 onto a photo diode 560. The photo diode 560 receives and converts the optical signal 550 into a digital electrical signal which may then be passed to a trans-impedance amp 570 and then to a limiting amplifier 580.

While the particular METHOD AND SYSTEM FOR WIRELESS TRANSMISSION as herein shown and described in detail is fully capable of attaining the above-described objects of the invention, it is to be understood that it is the presently preferred embodiment of the present invention and is thus representative of the subject matter which is broadly contemplated by the present invention, that the scope of the present invention fully encompasses other embodiments which may become obvious to those skilled in the art, and that the scope of the present invention is accordingly to be limited by nothing other than the appended claims.

## Claims

1. A multimedia display system, comprising:
a source system of multimedia data;
a display system of multimedia data, the display system including a display (44, 150), the source system and display system communicating wirelessly with each other using an optical communication system (200, 250);
the source system having at least one master (46) writing data to at least one slave (60) in the display system, the data being for control purposes;
**characterised by**:
at least one slave simulator (48) in the source system and mirroring at least a portion of the slave (60) written to by the master (46), read commands from the master (46) addressed to the slave being satisfied from the slave simulator (48);
at least one master simulator (54) in the display system and communicating with the slave (60) to update the slave simulator (48) with changes in the slave (60);
a first shadow memory (50) in the slave simulator (48); and
a second shadow memory (56) in the master simulator (54), the master simulator (54) operating in an automatic loop to compare data in the slave (60) to data in the second shadow memory (56) and based thereon updating the first shadow memory (50).

2. The system of Claim 1, wherein the multimedia is at least one of: Digital Visual Interface (DVI) multimedia, and High Definition Multimedia Interface (HDMI) multimedia.

3. The system of Claim 2, wherein the optical communication system (200, 250) operates in the infrared band.

4. The system of Claim 1, wherein data is transmitted between the master (46) and the slave (60) at least in part using I²G protocol.

5. A method for displaying multimedia from a source (12, 110) on a display (44, 150), comprising:
wirelessly transmitting the multimedia from the source (12, 110) to the display (44, 150) using an optical communication system (52);
writing data for control purposes to a slave (60) at the display (44, 150) from a master (46) at the source using the optical communication system (52);
and **characterised by**:
using a master simulator in the display and in communication with the slave to update a slave simulator in the source that mirrors at least a portion of the slave and satisfies read commands from the master to the slave, the master simulator:
periodically polling the slave (60) for changes by comparing data in the slave to data in a master simulator shadow memory; and
sending, over the optical communication system (52), the changes to at least one slave simulator shadow memory (50) at the source, so that the slave simulator shadow memory (50) mirrors contents of the slave (60); and
immediately executing, from the slave simulator shadow memory (50), read commands from the master (46) addressed to the slave (60).

6. The method of claim 5, wherein the optical communication system operates in the infrared band.

## Patentansprüche

1. Multimedia-Anzeigesystem, das Folgendes umfasst:
ein Quellsystem für Multimediadaten;
ein Anzeigesystem für Multimediadaten, wobei das Anzeigesystem eine Anzeige (44, 150) enthält, wobei das Quellsystem und das Anzeigesystem unter Verwendung eines optischen Kommunikationssystems (200, 250) drahtlos miteinander kommunizieren;
wobei das Quellsystem wenigstens einen Master (46) besitzt, der Daten in wenigstens einen Slave (60) in dem Anzeigesystem schreibt, wobei die Daten Steuerzwecken dienen;
**gekennzeichnet durch**:
wenigstens einen Slave-Simulator (48) in dem Quellsystem, der wenigstens einen Teil des Slaves (60), in den **durch** den Master (46) geschrieben wird, spiegelt, wobei Lesebefehle von dem Master (46), die an den Slave gerichtet sind, **durch** den Slave-Simulator (48) erfüllt werden;
wenigstens einen Master-Simulator (54) in dem Anzeigesystem, der mit dem Slave (60) kommuniziert, um den Slave-Simulator (48) mit Änderungen in dem Slave (60) zu aktualisieren;
einen ersten Schattenspeicher (50) in dem Slave-Simulator (48); und
einen zweiten Schattenspeicher (56) in dem Master-Simulator (54), wobei der Master-Simulator (54) in einer automatischen Schleife arbeitet, um Daten in dem Slave (60) mit Daten in dem zweiten Schattenspeicher (56) zu vergleichen und anhand dessen den ersten Schattenspeicher (50) zu aktualisieren.

2. System nach Anspruch 1, wobei die Multimedia wenigstens eines der Folgenden sind: Digital Visual Interface-Multimedia (DVI-Multimedia) und High Definition Multimedia Interface-Multimedia (HDMI-Multimedia).

3. System nach Anspruch 2, wobei das optische Kommunikationssystem (200, 250) im Infrarotband arbeitet.

4. System nach Anspruch 1, wobei Daten zwischen dem Master (46) und dem Slave (60) wenigstens teilweise unter Verwendung des I²C-Protokolls gesendet werden.

5. Verfahren zum Anzeigen von Multimedia von einer Quelle (12, 110) auf einer Anzeige (44, 150), das Folgendes umfasst:
drahtloses Senden der Multimedia von der Quelle (12, 110) zu der Anzeige (44, 150) unter Verwendung eines optischen Kommunikationssystems (52);
Schreiben von Daten für Steuerzwecke in einen Slave (60) bei der Anzeige (44, 150) von einem Master (46) bei der Quelle unter Verwendung des optischen Kommunikationssystems (52);
und **gekennzeichnet durch**:
Verwenden eines Master-Simulators in der Anzeige, der mit dem Slave kommuniziert, um einen Slave-Simulator in der Quelle, der wenigstens einen Teil des Slaves spiegelt und Lesebefehle von dem Master zu dem Slave erfüllt, zu aktualisieren, wobei der Master-Simulator:
den Slave (60) periodisch auf Änderungen abfragt, indem er Daten in dem Slave mit Daten in einem Schattenspeicher des Master-Simulators vergleicht; und
über das optische Kommunikationssystem (52) die Änderungen zu wenigstens einem Schattenspeicher (50) des Slave-Simulators bei der Quelle sendet, so dass der Schattenspeicher (50) des Slave-Simulators Inhalte des Slaves (60) spiegelt; und
Lesebefehle von dem Master (46), die an den Slave (60) gerichtet sind, aus dem Schattenspeicher (50) des Slave-Simulators sofort ausführt.

6. Verfahren nach Anspruch 5, wobei das optische Kommunikationssystem im Infrarotband arbeitet.

## Revendications

1. Système d'affichage multimédia, comprenant :
un système source de données multimédia
un système d'affichage de données multimédia, le système d'affichage comportant un affichage (44, 150), le système source et le système d'affichage communiquant sans fil l'un avec l'autre au moyen d'un système de communication optique (200, 250) ;
le système source possédant au moins un maître (46) qui écrit des données sur au moins un esclave (60) dans le système d'affichage, les données étant utilisées à des fins de commande ;
**caractérisé par** :
au moins un simulateur esclave (48) dans le système source et reflétant une partie au moins de l'esclave (60) sur lequel écrit le maître (46), des commandes de lecture issues du maître (46) adressées à l'esclave étant satisfaites à partir du simulateur esclave (48) ;
au moins un simulateur maître (54) dans le système d'affichage et communiquant avec l'esclave (60) pour mettre à jour le simulateur esclave (48) par des changements dans l'esclave (60) ;
une première mémoire fantôme (50) dans le simulateur esclave (48) ; et
une deuxième mémoire fantôme (56) dans le simulateur maître (54), le simulateur maître (54) fonctionnant en boucle automatique pour comparer des données dans l'esclave (60) à des données dans la deuxième mémoire fantôme (56) et, sur la base de la comparaison, mettant en jour la première mémoire fantôme (50).

2. Système selon la revendication 1, dans lequel le multimédia est au moins un multimédia parmi : un multimédia DVI (Digital Visual Interface) et un multimédia HDMI (High Definition Multimedia Interface).

3. Système selon la revendication 2, dans lequel le système de communication optique (200, 250) fonctionne dans la bande infrarouge.

4. Système selon la revendication 1, dans lequel la transmission de données entre le maître (46) et l'esclave (60) s'effectue en partie au moins selon le protocole I²C.

5. Procédé d'affichage d'un multimédia issu d'une source (12, 110) sur un affichage (44, 150), comprenant les étapes consistant à :
transmettre sans fil le multimédia issu de la source (12, 110) à l'affichage (44, 150) au moyen d'un système de communication optique (52) ;
écrire des données utilisées à des fins de commande sur un esclave (60) au niveau de l'affichage (44, 150) depuis un maître (46) au niveau de la source au moyen du système de communication optique (52) ; et
**caractérisé en ce qu'**il comprend les étapes consistant :
utiliser un simulateur maître dans l'affichage et en communication avec l'esclave pour mettre à jour un simulateur esclave dans la source qui reflète une partie au moins de l'esclave et satisfait des commandes de lecture du maître à l'esclave, le simulateur maître étant conçu pour :
interroger périodiquement l'esclave (60) pour y déceler des changements en comparant des données dans l'esclave à des données dans une mémoire fantôme du simulateur maître ; et
envoyer, par le biais du système de communication optique (52), les changements à au moins une mémoire fantôme (50) du simulateur esclave au niveau de la source de manière à ce que la mémoire fantôme (50) du simulateur esclave reflète le contenu de l'esclave (60) ; et
exécuter immédiatement, à partir de la mémoire fantôme (50) du simulateur esclave, des commandes de lecture issues du maître (46) adressées à l'esclave (60).

6. Procédé selon la revendication 5, dans lequel le système de communication optique fonctionne dans la bande infrarouge.
